# EUROPEAN PATENT APPLICATION

(11) **EP 1 426 953 A1**
(43) Date of publication of application: **09.06.2004**
(21) Application number: 02767880.4
(22) Date of filing: 03.09.2002
(51) Int. Cl.: G11B 20/10, H04L 9/08, G06F 12/14

(54) **RECORDING MEDIUM REPRODUCTION METHOD AND REPRODUCTION APPARATUS, AND RECORDING MEDIUM RECORDING METHOD AND RECORDING APPARATUS**

(30) Priority: 14.09.2001 JP 2001280191
(71) Applicant: Sony Corporation, Tokyo 141-0001 (JP)
(72) Inventor: SAKO, Yoichiro, c/o SONY CORPORATION, Tokyo 141-0001 (JP); FURUKAWA, Shunsuke, c/o SONY CORPORATION, Tokyo 141-0001 (JP); INOKUCHI, Tatsuya, c/o SONY CORPORATION, Tokyo 141-0001 (JP)
(74) Representative: Smith, Samuel Leonard
(86) International application number: PCT/JP2002/008918
(87) International publication number: WO 2003/025930

(57) **Abstract**

A recording medium reproducing method is disclosed. It is judged whether or not content data which has been read from a recording medium is encrypted content data. When content data which has been read from the recording medium is encrypted content data, third key data (key locker key data) for decrypting encrypted content key data which has been read from the recording medium is generated with at least first key data (medium bind key data) and second key data (medium key block) which has been read from the recording medium. With the content key data decrypted with the third key data, the encrypted data which has been read from the recording medium is decrypted.

## Description

### Technical Field

The present invention relates to a reproducing method and a reproducing apparatus for a recording medium and a recording method and a recording apparatus for a recording method which allow security to be kept using encryption.

### Background Art

Contents of which digital data of music information recorded on CDs (Compact Discs) has been compressed corresponding to MP3 (MPEG1 Audio Layer III) are distributed on the Internet. Data which is read from a CD is copied to a CD-R (CD-Recordable) disc. In addition, a peer-to-peer type music file exchange service provided by Napster, which is an American company, has been widely used. As a result, in recent years, a matter of copyright protection (hereinafter sometimes referred to as security) has been highlighted. Thus, in new type mediums which have been proposed in recent years such as optical discs, memory cards, and so forth corresponding to SACD (Super Audio CD) and DVD (Digital Versatile Disc or Digital Video Disc) audio standards, content data is encrypted so as to keep its security. For example, a memory card uses a flash memory and is attachable and detachable to and from a an apparatus. When encrypted music data is tried to be recorded to the memory card, the apparatus and the memory card authenticate each other. Only when they have successfully authenticated each other, the encrypted data can be recorded to the memory card.

To prevent data recorded on a CD from being illegally ripped or copied, a new type medium which has the same physical structure as a conventional CD and uses a copy protecting means has been considered. In such a new type medium, hidden key data which is bound to the medium is recorded thereon so that data is prevented from being copied bit by bit.

Only an apparatus which can deal with the new type medium can read the key data. Thus, although the security (copyright protection) of data can be sufficiently kept, since conventional many CD players cannot read the key data, they cannot reproduce content data from the new type mediums. Thus, to use such new type mediums, users should buy a recorder/player which deals with the new type mediums. Consequently, new burdens including an economical burden will be imposed on the users. These burdens will prevent the new type medium from being widely used.

Therefore, an object of the present invention is to provide a reproducing method and a reproducing apparatus for a recording medium and a recording method and a recording apparatus for a recording medium which allow a new type medium, drive, or the like which has a full-scale security function using a key which is bound to a medium to be easily introduced.

### Disclosure of the Invention

To accomplish the forgoing object, claim 1 of the present invention is a recording medium reproducing method, comprising the steps of:
judging whether or not content data which has been read from a recording medium is encrypted content data;
generating third key data (key locker key data) for decrypting encrypted content key data which has been read from the recording medium with at least first key data (medium bind key data) and second key data (medium key data) which has been read from the recording medium when the content data which has been read from the recording medium is encrypted content data; and
decrypting the encrypted content data which has been read from the recording medium with the content key data which has been decrypted with the third key data.

Claim 9 of the present invention is a recording medium reproducing apparatus, comprising:
a head portion for reading data from a recording medium on which at least data and identification data for identifying the data as encrypted data have been recorded;
a reproduction signal processing portion for performing a reproduction signal process for output data of the head portion;
a judging portion for judging whether or not the data which has been read from the recording medium is encrypted data corresponding to the identification data; and
a decryption processing portion for receiving output data of the reproduction signal processing portion, generating third key data (key locker key data) for decrypting encrypted content key data which has been read from the recording medium with at least first key data (medium key block) and second key data (medium bind key data) which has been read from the recording medium, and decrypting the encrypted content data which has been read from the recording medium with the content key data which has been decrypted with the third key data.

Claim 17 of the present invention is a recording medium recording method, comprising the steps of:
judging whether or not supplied content data is content data which needs to be encrypted and when the judged result represents that the supplied content data is content data which needs to be encrypted, encrypting the supplied content data with content key data;
encrypting the content key data with third key data (KL_key) generated with at least first key data (MB_Key) and second key data (MKB) recorded on a recording medium; and
recording the encrypted content data, the encrypted content key data, and identification data for identifying the content data as encrypted content data.

Claim 23 of the present invention is a recording medium recording apparatus, comprising:
a judging portion for judging whether or not supplied content data is content data which needs to be encrypted;
an encryption processing portion for encrypting the supplied content data with content key data and encrypting the content key data with third key data (KL_key) generated with at least first key data (MB_key) and second key data (MKB) which has been recorded on the recording medium when the judging portion has judged that the supplied content data is content data which needs to be encrypted; and
a recording portion for performing a signal process for the encrypted content data which has been output from the encryption processing portion, the encrypted content key data, and identification data for identifying the content data as encrypted content data and recording resultant signals on the recording medium.

Claim 29 of the present invention is a recording medium reproducing method, comprising the steps of:
generating third key data (key locker key data) for decrypting encrypted content key data which has been read from a recording medium with at least first key data (medium bind key data) and second key data (medium key block) which has been read from the recording medium; and
decrypting the encrypted content data which has been read from the recording medium with the content key data which has been decrypted with the third key data.

### Brief Description of Drawings

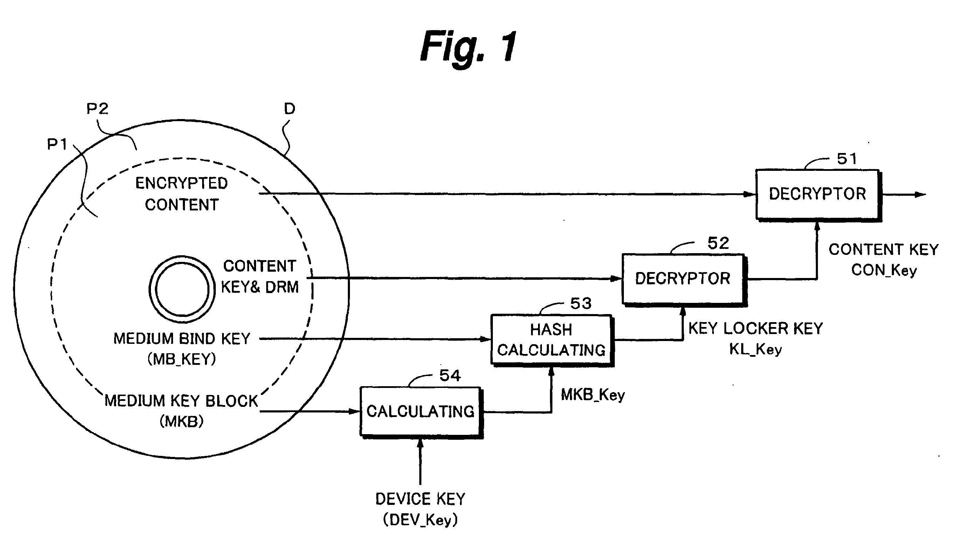

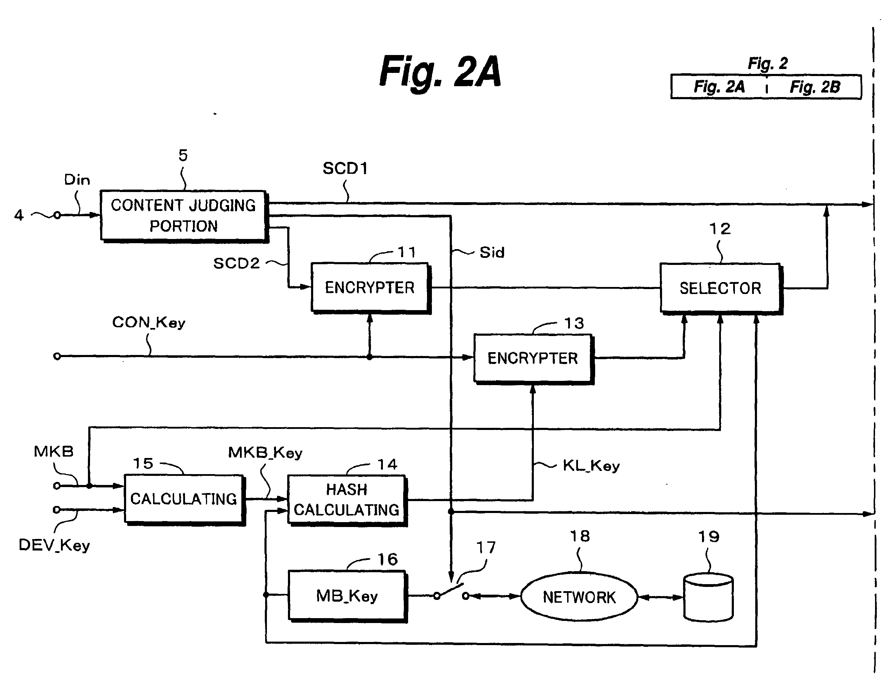

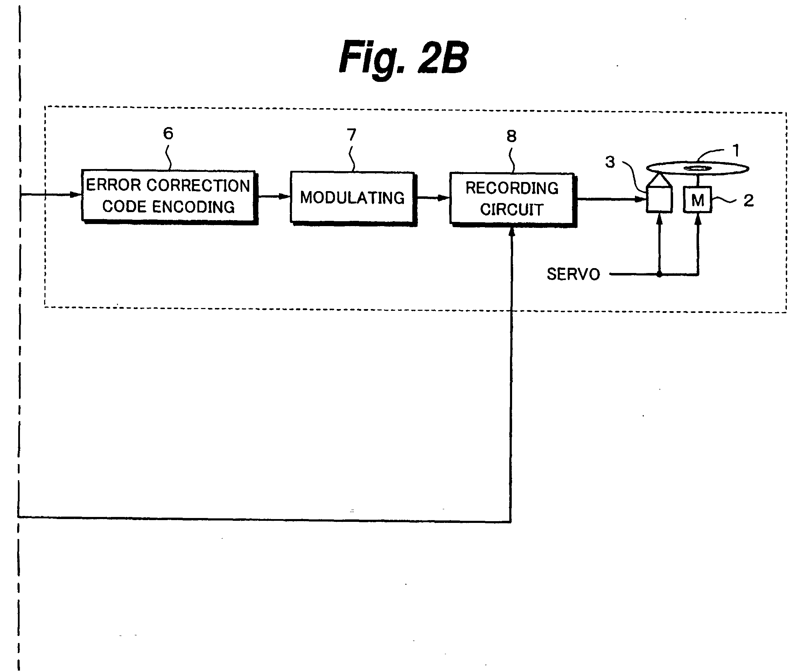

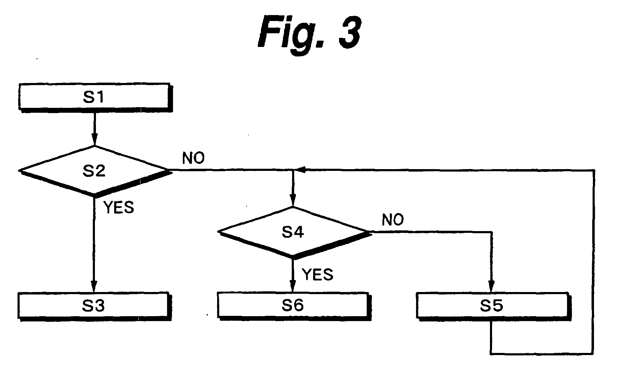

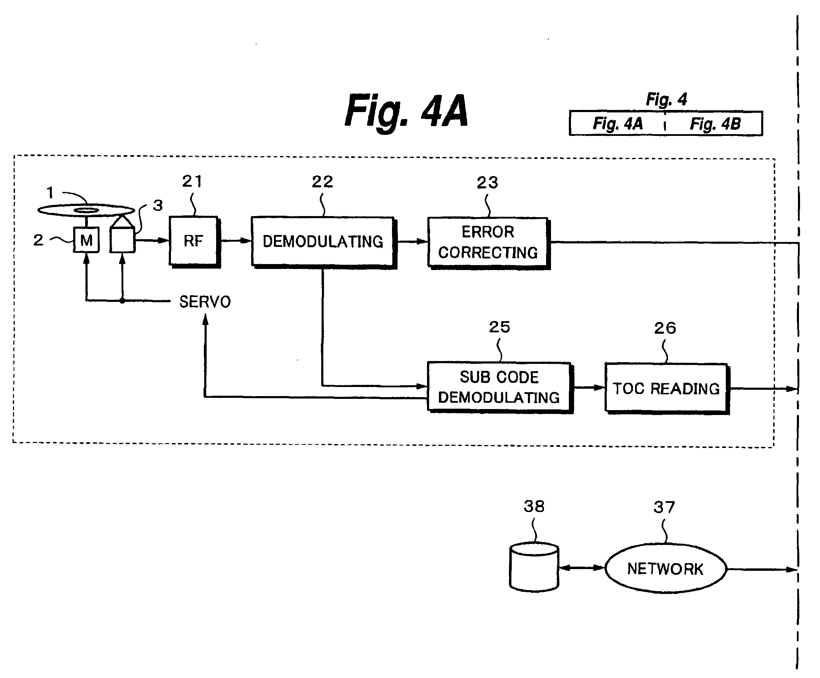

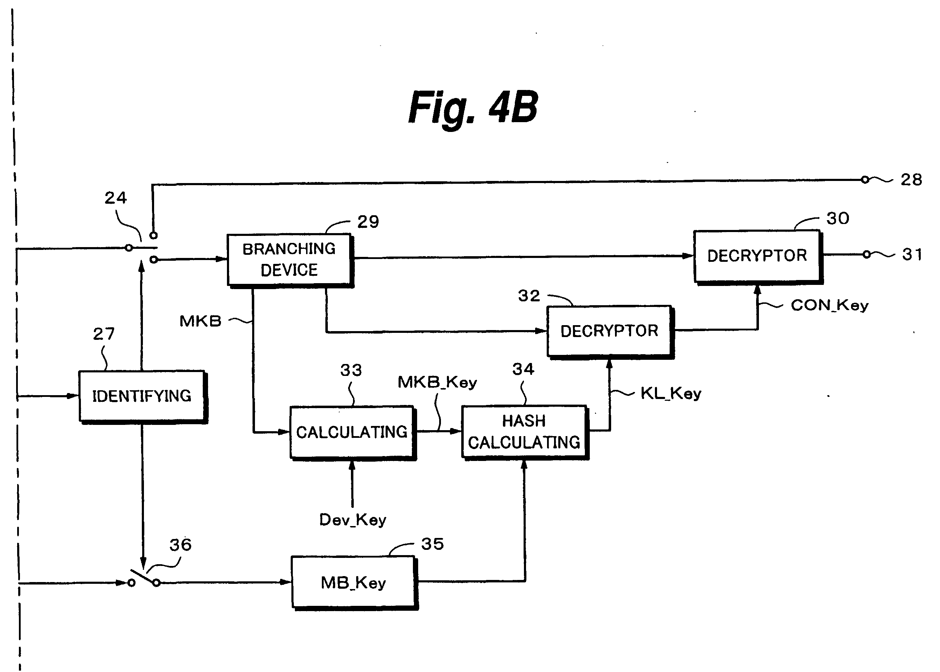

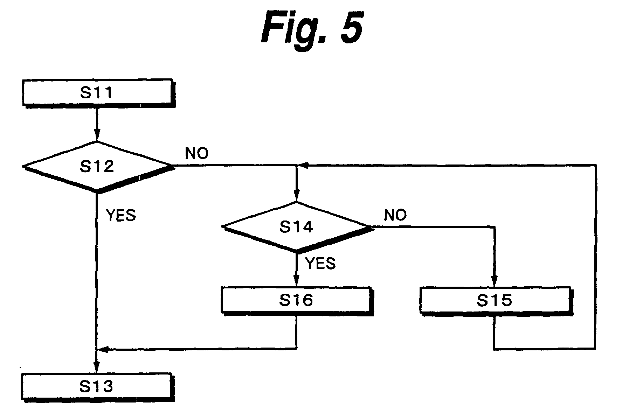

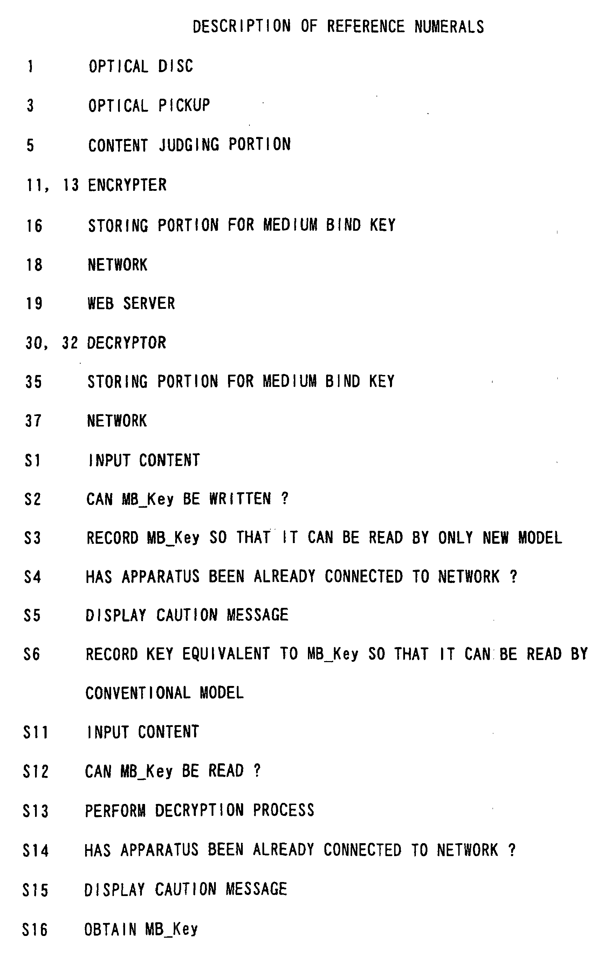

Fig. 1 is a schematic diagram for explaining an outline of an encrypting system according to the present invention; Fig. 2 is a block diagram showing an example of the structure of a recording apparatus according to an embodiment of the present invention; Fig. 3 is a flow chart showing a process of a recording operation according to the embodiment of the present invention; Fig. 4 is a block diagram showing an example of the structure of a reproducing apparatus according to the embodiment of the present invention; and Fig. 5 is a flow chart showing a process of a reproducing operation according to the embodiment of the present invention.

### Best Modes for Carrying out the Invention

Next, an embodiment of the present invention will be described. The embodiment is an example of which the present invention is applied for a new type optical disc. Next, with reference to Fig. 1, an outline of a security (copyright protection) system for an optical disc D will be described. The optical disc D is almost the same as a commercially available CD in physical standards including disc size. Thus, data recorded on the disc D can be optically read by a conventional reproducing apparatus such as a CD player. However, unlike with a CD, encrypted content data has been recorded on the optical disc D. Encrypted content data is for example audio data corresponding for example CD-ROM format or CD-DA (Digital Audio) format or picture which has been encrypted. As the encrypting method, DES (Data Encryption Standard) or the like can be used. When necessary, audio data as content data has been compressed and encoded corresponding to ATRAC (Adaptive Transform Acoustic Coding), MP3 (MPEG1 Audio Layer III), TwinVQ (Transform-domain Weighted Interleave Vector Quantization) or the like.

Beside encrypted content data, content key data, data with respect to DRM (Digital Rights Management), medium bind key data MB_Key, and medium key block data MKB have been recorded on the optical disc D. The data with respect to DRM is management data which designates how content data should be handled, how many times content data has been copied, whether content data can be reproduced or copied, and management data for the generation of copied content data. The content key data and the data with respect to DRM have been encrypted and recorded on the optical disc D.

Encrypted content data which is read from the optical disc D by an optical pickup (not shown) is decrypted with content key data CON_Key by a decryptor 51. Decrypted content data is output from the decryptor 51. When the encrypted content data is decrypted by the decryptor 51, the data with respect to DRM is extracted. Corresponding to the data with respect to DRM, decrypted content data which is output from the decryptor 51 is controlled. As a result, reproduction and copy of the decrypted content data are restricted. The content key data and the data with respect to the DRM which are read from the optical disc D by the optical pickup (not shown) are supplied to a decryptor 52. The decryptor 52 decrypts the content data and the data with respect to the DRM using key locker key data KL_Key and obtains content key data CON_Key as output data.

A hash calculating portion 53 generates key locker key data KL_Key using medium bind key data MB_Key, medium key block data MKB, and device key data DEV_Key. Device key data DEV_Key is key data unique to a recording and/or reproducing apparatus which records or reproduces content data to or from the optical disc D or unique to application software installed to a personal computer which reproduces content data from the optical disc D. A recording and/or reproducing apparatus which deals with the optical disc D has device key data DEV_Key. Device key data DEV_Key is key data which can be output to the outside of the apparatus and transferred to another apparatus.

Medium bind key data MB_Key is key data which a conventional CD player, a conventional CD drive, or conventional CD application software cannot reproduce. Medium bind key data MB_Key has a predetermined bit length. Medium bind key data MB_Key means key data which is recorded on the optical disc D in such a manner that it is bound thereto. Medium bind key data MB_Key has been embedded on the optical disc D so that when a CD drive or the like reproduces content data from the optical disc D, the CD drive or the like cannot read medium bind key data MB_Key from the optical disc D. In contrast, the forgoing recording and/or reproducing apparatus or the like which can record or reproduce content data to or from the optical disc D can read medium bind key data MB_Key from the optical disc D. In reality, key data represented with deformation of pits formed on the optical disc D, key data represented with wobbling of pits, or key data represented with combined bits (three bits) of EFM modulation is medium bind key data MB_Key.

Medium bind key data MB_Key which has been read from the optical disc D by the optical pickup (not shown) is supplied to the hash calculating portion 53. Likewise, medium key block data MKB which has been read from the optical disc D is supplied to a calculating portion 54. Unlike with medium bind key data MB_Key, medium key block data MKB can be read from the optical disc D by a conventional CD drive or the like. Device key data DEV_Key stored in a controller or the like of the apparatus is supplied to the calculating portion 54. The calculating portion 54 calculates medium key block data MKB and device key data DEV_Key and generates key data MKB_Key. Different recording and/or reproducing apparatuses which can record and reproduce content data to and from the same optical disc D generate the same key data MKB_Key. The hash calculating portion 53 obtains a hash value of medium bind key data MB_Key and key data MKB_Key as key locker key data KL_Key. The hash calculating portion 53 supplies key locker key data KL_Key to the decryptor 52. With key locker key data KL_Key, the decryptor 52 decrypts the content key data and the data with respect to DRM and obtains content key data CON_Key.

Examples of the optical disc D are read-only (ROM) type, write-once type, and rewritable type. In Fig. 1, the optical disc D is of multi-session type. The record area of the optical disc D is divided into two portions in the radial direction of the optical disc D. The inner periphery side of the two portions is a first session P1 in which one of non-encrypted content data (namely, plain content data) and encrypted data may be recorded. The outer periphery side of the two portions is a second session P2 in which non-encrypted content data (plain content data) or encrypted data which is not recorded in the first session P2 may be recorded. Each session is composed of an lead-in area, a program area, and a lead-out area. In the lead-in area, management data for content data recorded in the program area, identification data for identifying the type of the optical disc D, and so forth are recorded. In the program area, content data is recorded. The lead-out area is disposed on the outer periphery side of the program area.

Fig. 2 shows an example of a recording apparatus according to the present invention. The recording apparatus shown in Fig. 2 is not limited to dedicated hardware. Alternatively, the recording apparatus may be accomplished by a disc drive and a personal computer in which dedicated software has been installed. In Fig. 2, a block surrounded by dotted lines is composed of hardware (which is a disc drive for a conventional CD-R disc recording and reproducing apparatus or a conventional CD-R/W disc recording and reproducing apparatus). The remaining portions are accomplished by software executed by a controller such as a CPU. The software may contain device key data DEV_Key and medium key block data MKB.

In Fig. 2, reference numeral 1 represents a recordable optical disc such as a CD-RW disc or a CD-R disc. Content data which has been reproduced from a conventional recording medium such as a CD-DA or a CD-ROM or content data which has been reproduced from the optical disc D, which is the forgoing new type medium, is recorded to the optical disc 1. In other words, the recording apparatus shown in Fig. 2 can be used to make a copy of data which has been read from a conventional recording medium such as a CD or the forgoing optical disc D.

The recording apparatus shown in Fig. 2 can record data which has been read from the optical disc D to a recording and reproducing apparatus for a conventional optical disc, namely an optical disc drive. In other words, the recording apparatus which can deal with the new type optical disc D or the drive which is composed of application software and which can deal with the optical disc D records medium bind key data MB_Key on the optical disc D in such a manner that medium bind key data MB_Key is bound thereto. In contrast, the conventional recording apparatus or the conventional drive cannot record medium bind key data MB_Key on the optical disc D in such a manner that medium bind key data MB_Key is bound thereto. Thus, as will be described later, the conventional recording apparatus or the conventional drive receives medium bind key data MB_Key through a network.

The optical disc 1 is rotated and driven at constant linear velocity or constant angular velocity by a spindle motor 2. To record data to the optical disc 1 and read data therefrom, an optical pickup 3 is disposed. The optical pickup 3 is traveled in the radial direction of the optical disc 1 by a traveling mechanism which uses a feed motor (not shown).

According to the embodiment, the optical disc 1 is a phase change type disc of which data is recorded by radiating laser light having a recordable output level to the optical disc 1 and data is reproduced by detecting the variation of a light amount of laser light reflected from the optical disc 1. A recording film which is composed of a phase change type recording material is coated on a substrate which is composed of polycarbonate. With polycarbonate which is injection molded, track guide grooves have been formed on the substrate. The track guide grooves are also referred to as pre-grooves because they have been formed beforehand. A portion formed between grooves is referred to as land. Normally, viewed from the incident side of reading laser light on the substrate, the near side is a land, whereas the far side is a groove. Grooves are successively and spirally formed from the inner periphery to the outer periphery. As long as the optical disc 1 is a recordable disc, besides a phase change type optical disc, the present invention can be applied for a magneto-optical disc or a write-once type disc which uses an organic coloring matter as a recording material.

Grooves are wobbled in the radial direction of the optical disc so as to control the rotation of the optical disc 1 and obtain a reference signal with which data is recorded. Data is recorded in grooves or both grooves and lands. In addition, grooves are wobbled as wobble information in the radial direction of the optical disc corresponding to absolute time information as address information so as to successively record data. In a CD-R disc and a CD-RW disc, with reference to absolute time information as address information obtained with wobble information of grooves, a desired write position is sought on the optical disc 1. The optical pickup 3 is traveled to the desired write position and the laser light is radiated from the optical pickup 3 to the optical disc 1. As a result, data is written to the optical disc.

An optical disc having wobbled grooves is produced in the following manner. In a mastering apparatus, laser light is radiated to a photo resist film coated on a disc shaped glass substrate. In addition, laser light is deflected or swung in the radial direction. In other words, laser light is displayed. As a result, grooves wobbled in the radial direction of the optical disc, namely, wobbling grooves, are formed. The photo resist film which has been exposed with the laser light is developed. As a result, a master disc is produced. The developed master disc is electroformed. As a result, a stamper is produced. With the stamper, an injection molding process is performed. As a result, a disc substrate having wobbled grooves is produced. The phase change type recording material is coated on the disc substrate by a spattering method or the like. As a result, an optical disc is produced.

Returning to Fig. 2, content data Din to be recorded for example audio and/or video data is supplied from an input terminal 4 to a content judging portion 5. Content data Din is either content data which needs to be encrypted or content data which does not need to be encrypted. Content data which needs to be encrypted is content data which has been reproduced from for example the forgoing optical disc D. Content data which does not need to be encrypted is content data which has been reproduced from for example a conventional CD. The content judging portion 5 judges whether input content data Din is content data which does not need to be encrypted or content data which needs to be encrypted corresponding to format information contained in for example the input content data. The content judging portion 5 outputs identification signal Sid representing the identified result, content data SCD1 which does not need to be encrypted, and content data SCD2 which needs to be encrypted.

Content data SCD1 which does not need to be encrypted is output from the content judging portion 5 and supplied to an error correction code encoder 6. The error correction code encoder 6 performs an error correction code encoding process for content data SCD1. Output data of the error correction code encoder 6 is supplied to a modulating portion 7. The modulating portion 7 performs a modulating process for example an EFM modulating process. Output data of the modulating portion 7 is supplied to a recording circuit 8. In addition, identification signal Sid is supplied to the recording circuit 8. The recording circuit 8 performs a process for adding a frame synchronous signal, address data, and so forth to output data supplied from the modulating portion 7. A laser driving circuit portion of the recording circuit 8 generates a drive signal which causes a semiconductor laser device to output laser light having a predetermined level so that record data can be recorded to the optical disc 1. The drive signal of the laser driving circuit portion is supplied to the semiconductor laser device as a light source of the optical pickup 3. Laser light modulated corresponding to the drive signal supplied from the semiconductor laser device is radiated to the optical disc 1. As a result, data is recorded on the optical disc 1.

Identification signal Sid for identifying a content recorded on the optical disc 1 as a plain content/content data which does not need to be encrypted or a content/content data which needs to be encrypted and which has been encrypted is supplied to the recording circuit 8. The recording circuit 8 outputs identification signal Sid to the optical pickup 3 so that identification signal Sid is recorded as TOC data to a predetermined position for example a lead-in area of the optical disc 1.

When input content data Din is content data which needs to be encrypted, content data SCD2 is output from the content judging portion 5. An encrypter 11 encrypts content data SCD2 with content key data CON_Key. The encrypted data is supplied to a selector 12. Besides output data of the encrypter 11, output data of an encrypter 13, medium key block data MKB, and medium bind key data MB_Key are supplied to the selector 12. The encrypter 13 encrypts content key data CON_Key with key locker key data KL_Key. The encrypted content key data is supplied to the selector 12. The data with respect to DRM is added to content key data CON_Key.

Key locker key data KL_Key is data calculated by a hash calculating portion 14. Medium key block data MKB and device key data DEV_Key are calculated by a calculating portion 15. An output of the calculating portion 15 is supplied to the hash calculating portion 14. Medium bind key data MB_Key stored in a storing portion 16 is supplied to the hash calculating portion 14. The hash calculating portion 14 generates a hash value of medium bind key data MB_Key and key data MKB_Key (namely, key locker key data KL_Key). The forgoing key data necessary for encryption other than medium bind key data MB_Key is contained in reproduction data of the optical disc D and extracted from the reproduction data by application software. Medium bind key data MB_Key is hidden and is not contained in the reproduction output data of the optical disc D.

Key data equivalent to medium bind key data MB_Key is down loaded from a WEB server (WEB site) 19 to the storing portion 16 through a switch 17 and a network 18. Since key data which is down loaded has not been bound to a recording medium, strictly speaking, the key data is different from medium bind key data MB_Key of the optical disc D. However, since they are the same in their functions, key data which is down loaded is also referred to as medium bind key data MB_Key. When the structure excluding the disc drive is accomplished by application software for a personal computer, medium bind key data MB_Key is obtained through the network 18 using a communication function of the personal computer. The switch 17 is operated between on state and off state corresponding to identification signal Sid. Only when content data which needs to be encrypted is recorded on the optical disc 1, the switch 17 is operated in the on state.

To obtain medium bind key data MB_Key through the network 18, the server 19 and the recording apparatus shown in Fig. 2 should successfully authenticate each other. When the recording apparatus shown in Fig. 2 is composed of for example application software, a personal computer, and a driver, the personal computer inputs user ID data, software unique number, password, and so forth to the server 19. Only when these input contents are correct, medium bind key data MB_Key can be obtained from the server 19. The network 18 is for example the Internet. Due to a security reason, after the recording operation has been performed for the optical disc 1 one time, medium bind key data MB_Key which has been down loaded to the storing portion 16 is erased. Alternatively, in a predetermined time period after medium bind key data MB_Key has been down loaded, it may be erased.

The selector 12 outputs content data encrypted with content key data CON_Key, content key data CON_Key encrypted with key locker key data KL_Key, medium key block data MKB, and medium bind key data MB_Key to the error correction code encoder 6 surrounded by dotted lines in the disc drive at predetermined timings. Encrypted content data is processed as main data by the disc drive. The disc drive processes content key data CON_Key, medium key block data MKB, and medium bind key data MB_Key so that they co-exist in the main data. For example, these data are recorded as a file which is different from a file for the main data. Alternatively, content key data CON_Key, medium key block data MKB, and medium bind key data MB_Key may be processes as sub code data or recorded in a lead-in area. Output data of the error correction code encoder 6 is modulated by the modulating portion 7. The modulated data is supplied to the optical pickup 3 through the recording circuit 8. The optical pickup 3 records the modulated data on the optical disc 1. Identification signal Sid is recorded to a predetermined position for example a lead-in area of the optical disc 1.

In such a manner, medium bind key data MB_Key is down loaded from the server 19 through the network 18. Thus, an environment which is the same as the recording and/or reproducing apparatus which records and reproduces content data to and from the optical disc D can be accomplished by the conventional optical disc drive or the like. As a result, the conventional optical disc drive or the like can record encrypted content data to the optical disc 1 like the optical disc D.

Fig. 3 shows a process of application software for recording content data to the optical disc D. At step S1, content data which needs to be encrypted is input. At step S2, the optical disc drive judges whether or not medium bind key data MB_Key can be written to a medium in such a manner that medium bind key data MB_Key is bound thereto. The recording and reproducing apparatus for the optical disc D can write medium bind key data MB_Key to the medium in such a manner that medium bind key data MB_Key is bound thereto, the flow advances to step S3. At step S3, medium bind key data MB_Key is recorded to the optical disc 1 in such a manner that only the recording and/or reproducing device for the optical disc D can read medium bind key data MB_Key (namely, medium bind key data MB_Key is bound to the medium).

Since the conventional optical disc drive or the like according to the embodiment cannot write medium bind key data MB_Key to a medium in such a manner that medium bind key data MB_Key is bound thereto, the judged result at step S2 is No. At step S4, it is judged whether or not the optical disc drive has been connected to the server 19. When the server 19 and the optical disc drive as a recording apparatus have successfully authenticated each other, the optical disc drive can be connected to the server 19. When the judged result at step 4 represents that the optical disc drive and the server 19 have not been yet connected, the flow advances to step S5. At step S5, a caution message such as "Connect Optical Disc Drive to WEB server !" is displayed on a display portion of the optical disc drive. When the optical disc drive has not been connected to the server 19 for a predetermined time period, a time out error occurs and an error process is performed (not shown).

When the judged result at step S4 represents that the optical disc drive has been already connected to the server 19 (namely, the optical disc drive and the server 19 have successfully authenticated each other and medium bind key data MB_Key has been down loaded from the server 19), the flow advances to step S6. At step S6, the optical disc drive records medium bind key data MB_Key to the optical disc 1 in such a manner that the conventional optical disc drive can read medium bind key data MB_Key. To improve security of medium bind key data MB_Key, it may not be recorded on the optical disc 1. In this case, as with a reproducing apparatus which will be described next, medium bind key data MB_Key can be obtained through the network. With medium bind key data MB_Key, encrypted content data can be reproduced.

Fig. 4 shows an example of a reproducing apparatus which is a conventional optical disc drive or the like and which can reproduce content data which needs to be encrypted and which has been encrypted. The reproducing apparatus is composed of a drive as hardware surrounded by dotted lines shown in Fig. 4, a CD-ROM disc reproducing apparatus, a CD-R disc recording and reproducing apparatus, a CD-RW disc recording and reproducing apparatus, or the like, and application software. Of course, the reproducing apparatus may be composed of only hardware. An optical disc 1 shown in Fig. 4 is an optical disc on which plain or encrypted content data has been recorded by the forgoing recording apparatus. The plain or encrypted content data is a copy of data which has been read from a CD or the forgoing optical disc D. However, the optical disc 1 is not limited to those. Alternatively, the optical disc 1 may be a disc on which content data which had been distributed by for example EMD (Electronic Music Distribution) has been recorded. Alternatively, the optical disc 1 may be a read-only optical disc on which encrypted content data has been recorded.

An optical pickup 3 radiates laser light necessary for reproducing content data to the optical disc 1. A four-divided photo detector disposed on the optical pickup 3 detects laser light reflected by the optical disc 1. A signal detected by the photo detector is supplied to an RF process block 21. In the RF process block 21, a matrix amplifier calculates a detection signal of the photo detector and generates a reproduction (RF) signal, a tracking error signal, and a focus error signal. When a clock signal and address data have been recorded as information of wobbling grooves on the optical disc 1, a wobble detection signal is output from the RF process block 21. The RF signal is supplied to a demodulating portion 22. The demodulating portion 22 performs for example an EFM demodulation. Output data of the demodulating portion 22 is supplied to an error correcting circuit 23. The error correcting circuit 23 performs an error correcting process. Output data of the error correcting circuit 23 is supplied to a switch 24.

The tracking error signal and the focus error signal are supplied from the RF process block 21 to a servo circuit (not shown) so as to control the rotation of the spindle motor 2 and tracking and focus of laser light radiated from the optical pickup 3. The servo circuit performs tracking servo and focus servo for the optical pickup 3 and spindle servo and thread servo for the spindle motor 2.

The demodulating portion 22 outputs reproduced sub code data. The sub code data is supplied to a sub code demodulating portion 25. The sub code demodulating portion 25 demodulates time data contained in the sub code data (the time data is address data corresponding to the position on the disc). With the time data, the servo circuit is operated. The time data is supplied to a system controller (not shown). With the time data, the position of the optical pickup 3 is controlled so as to read desired data from the optical disc 1. In the initial state when the optical disc 1 is loaded to the optical disc drive shown in Fig. 4, the optical pickup 3 reads the lead-in area of the optical disc 1. The optical pickup 3 reads TOC data recorded in the lead-in area of the optical disc 1. The TOC data is supplied to a TOC reading portion 26.

Data which is output from the TOC reading portion 26 contains identification signal Sid. A judging portion 27 performs a judging operation corresponding to identification signal Sid extracted from output data of the TOC reading portion 26. The switch 24 is controlled corresponding to an identified result of the judging portion 27. In other words, when data which has been read from the optical disc 1 is plain content data which has not been encrypted, the switch 24 is operated so that output data of the error correcting circuit 23 is supplied to an output terminal 28. In contrast, when data which has been read from the optical disc 1 is content data which has been encrypted, the switch 24 is operated so that output data of the error correcting circuit 23 is supplied to a branching device 29.

The branching device 29 branches content key data encrypted with content key data CON_Key, content key data CON_Key encrypted with key locker key data KL_Key, and medium key block data MKB. The encrypted content data is supplied to a decryptor 30. The decryptor 30 decrypts the encrypted content data with content key data CON_Key and outputs decrypted data to an output terminal 31. A decryptor 32 outputs content key data CON_Key.

Medium key block data MKB which is output from the branching device 29 is supplied to a calculating portion 33. Device key data DEV_Key which is unique to the reproducing apparatus or the application software is supplied to the calculating portion 33. The calculating portion 33 generates key data MKB_Key. Key data MKB_Key and medium bind key data MB_Key supplied from a storing portion 35 are supplied to a hash calculating portion 34. The hash calculating portion 34 calculates a hash value of medium bind key data MB_Key and key data MKB_Key and obtains key locker key data KL_Key and supplies the obtained data to the decryptor 32. The decryptor 32 decrypts the content key data and the data with respect to DRM which have been encrypted and obtains content key data CON_Key.

Medium bind key data MB_Key which the conventional optical disc drive or the like cannot read is down loaded from a WEB server (WEB site) 38 to the storing portion 35 through a switch 36 and a network 37. When the structure excluding the drive surrounded by dotted lines shown in Fig. 4 is accomplished by application software for a personal computer, medium bind key data MB_Key is obtained using a communication function of the personal computer. The switch 36 is controlled corresponding to the identified result. Only when encrypted content data is reproduced, the switch 36 is turned on.

To obtain medium bind key data MB_Key through the network 37, the reproducing apparatus shown in Fig. 4 and the WEB server 38 should successfully authenticated each other. When the reproducing apparatus is composed of application software, a personal computer, and a drive, the personal computer inputs data with respect to user's ID, software unique number, password, and so forth. Only when the input contents and input data are correct, the reproducing apparatus (namely, the optical disc drive) can obtain medium bind key data MB_Key from the WEB server 38. The network 37 is for example the Internet. Due to security reason, medium bind key data MB_Key which has been down loaded to the storing portion 35 is erased after data of an optical disc or content data has been reproduced one time. Alternatively, in a predetermined time period after medium bind key data MB_Key has down loaded, it may be erased. The method for obtaining medium bind key data MB_Key from the WEB server 38 is the same as that for the forgoing recording apparatus.

Since medium bind key data MB_Key is down loaded from the WEB server 38 through the network 37, an environment which is the same as the recording and/or reproducing apparatus for the optical disc D can be accomplished by the conventional optical disc drive or the like. As a result, the conventional optical disc drive or the like can read and reproduce encrypted content data from the optical disc D.

When medium bind key data MB_Key is distributed to the optical disc drive or the like through the network, the reproducing apparatus (reproducing application software) side or the server side can manage data with respect to DRM (Digital Rights Management) such as restriction about the number of copies of content data. When the server side manages the number of copies of content data, each of the reproducing apparatus, the drive, and the application software manages a down load history of medium bind key data MB_Key. In this case, when key data is requested to be down loaded, identification information of a disc or content data is also transmitted to the WEB server 38. The WEB server 38 monitors the number of times of which key data for each disc or each content data has been down loaded. As a result, the WEB server 38 can grasp the number of reproductions or copies of a disc or content data. As a result, the WEB server 38 can restrict reproduction or copy of a disc or content data.

Fig. 5 shows a process of application software for reproducing content data from optical disc D. At step S11, encrypted content data which has been read and reproduced from the optical disc 1 by the drive of the reproducing apparatus is input. At step S12, it is judged whether or not the drive can read medium bind key data MB_Key. When the drive is the forgoing reproducing apparatus or the like which can reproduce content data from the optical disc D, since the drive can read medium bind key data MB_Key, the flow advances to step S13. At step S13, a decrypting process for decrypting encrypted content data which has been read from the optical disc 1 is performed.

Since the conventional optical disc drive or the like cannot read medium bind key data MB_Key, the judged result at step S12 is No. Thereafter, the flow advances to step S14. At step S14, it is judged whether or not the drive has been already connected to the WEB server 38. When the WEB server 38 and the reproducing apparatus have successfully authenticated each other, the apparatus can be connected to the WEB server 38. When the judged result at step S14 represents that the apparatus has not been yet connected to the WEB server 38, the flow advances to step S15. At step S15, a caution message such as "Connect Apparatus to WEB Server !!" is displayed on a display portion (not shown) of the reproducing apparatus. When the apparatus has not been connected to the WEB server 38 for a predetermined time period (not shown), a time out error takes place and the process shown in Fig. 5 is terminated.

When the judged result at step S14 represents that the apparatus has been already connected to the WEB server 38, the WEB server 38 and the recording apparatus have successfully authenticated each other. Thus, to down load medium bind key data MB_Key, the flow advances to step S16. At step S16, medium bind key data MB_Key is down loaded from the WEB server 38 and stored to the storing portion 35. With the obtained medium bind key data MB_Key, encrypted content data is decrypted (at step S13).

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention. For example, besides a personal computer, the forgoing application software may be installed to a network home electronic apparatus such as a set top box. When the recording method according to the present invention is applied for a read-only optical disc, the recording apparatus shown in Fig. 2 can be applied for a mastering apparatus. In addition, the present invention can be applied for other data recording mediums such as memory cards besides optical discs.

The present invention provides a compatibility with a full scale security function in the stage that the new type drive or the like which accomplishes the full-scale security function using a medium bind key which is bound to a medium has not been common. When the security function is accomplished, the new type drive or the like can be smoothly introduced. When a key which is bound to a medium is introduced, an illegal copy can be prevented. With a conventional drive which cannot deal with a key which is bound to a medium, to obtain a key equivalent to the key bound to the medium, the drive and the WEB server should successfully authenticate each other. Thus, the security can be kept.

## Claims

1. A recording medium reproducing method, comprising the steps of:
judging whether or not content data which has been read from a recording medium is encrypted content data;
generating third key data (key locker key data) for decrypting encrypted content key data which has been read from the recording medium with at least first key data (medium bind key data) and second key data (medium key data) which has been read from the recording medium when the content data which has been read from the recording medium is encrypted content data; and
decrypting the encrypted content data which has been read from the recording medium with the content key data which has been decrypted with the third key data.

2. The recording medium reproducing method as set forth in claim 1,
wherein the third key generating step is performed by the steps of:
generating further key data (MKB_Key) with the second key data and key data (device key data) unique to reproducing means; and
performing a calculating process for the generated further key data and the first key data.

3. The recording medium reproducing method as set forth in claim 2,
wherein the first key data is key data which can be read from the recording medium by conventional reproducing means.

4. The recording medium reproducing method as set forth in claim 2,
wherein the first key data is key data which cannot be read by conventional reproducing means.

5. The recording medium reproducing method as set forth in claim 1, further comprising the step of:
obtaining the first key data from the outside through a network when the first key data has not been read from the recording medium by reproducing means.

6. The recording medium reproducing method as set forth in claim 1,
wherein identification data for identifying the content data as encrypted content data has been recorded on the recording medium, and
wherein the method further comprises the step of:
judging whether or not content data which has been read from the recording medium is encrypted data corresponding to the identification data which has been read from the recording medium.

7. The recording medium reproducing method as set forth in claim 1, further comprising the step of:
controlling an output of the decrypted content data corresponding to copyright management data.

8. The recording medium reproducing method as set forth in claim 1, further comprising the step of:
performing a reproduction signal process for data which has been read from the recording medium and outputting the resultant signal when the content data which has been read from the recording medium is non-encrypted content data.

9. A recording medium reproducing apparatus, comprising:
a head portion for reading data from a recording medium on which at least data and identification data for identifying the data as encrypted data have been recorded;
a reproduction signal processing portion for performing a reproduction signal process for output data of the head portion;
a judging portion for judging whether or not the data which has been read from the recording medium is encrypted data corresponding to the identification data; and
a decryption processing portion for receiving output data of the reproduction signal processing portion, generating third key data (key locker key data) for decrypting encrypted content key data which has been read from the recording medium with at least first key data (medium key block) and second key data (medium bind key data) which has been read from the recording medium, and decrypting the encrypted content data which has been read from the recording medium with the content key data which has been decrypted with the third key data.

10. The recording medium reproducing apparatus as set forth in claim 9,
wherein the decryption processing portion is configured to generate further key data (MKB_Key) with the second key data and key data (device key data) unique to reproducing means and perform a calculating process for the generated further key data and the first key data so as to generate the third key data.

11. The recording medium reproducing apparatus as set forth in claim 9,
wherein the first key data is key data which can be read from the recording medium by conventional reproducing means.

12. The recording medium reproducing apparatus as set forth in claim 9,
wherein the first key data is key data which cannot be read by conventional reproducing means.

13. The recording medium reproducing apparatus as set forth in claim 9,
wherein when the first key data has not been read from the recording medium by reproducing means, the first key data is obtained from the outside through a network.

14. The recording medium reproducing apparatus as set forth in claim 9,
wherein the decryption processing portion is configured to control an output of the decrypted content data corresponding to copyright management data.

15. The recording medium reproducing apparatus as set forth in claim 9, further comprising:
an output terminal,
wherein when the judging portion has judged that the content data which had been read from the recording medium is non-encrypted content data, output data of the reproduction signal processing portion is supplied to the output terminal.

16. The recording medium reproducing apparatus as set forth in claim 9, further comprising:
an output terminal; and
a switch circuit controlled corresponding to a judged result of the judging portion,
wherein when the judging portion has judged that the content data which had been read from the recording medium is encrypted content data, the switch circuit is operated so that output data of the reproduction signal processing portion is supplied to the decryption processing portion, and
wherein when the judging portion has judged that the content data which had been read from the recording medium is non-encrypted content data, the switch circuit is operated so output data of the reproduction signal processing portion is supplied to the output terminal.

17. A recording medium recording method, comprising the steps of:
judging whether or not supplied content data is content data which needs to be encrypted and when the judged result represents that the supplied content data is content data which needs to be encrypted, encrypting the supplied content data with content key data;
encrypting the content key data with third key data (KL_key) generated with at least first key data (MB_Key) and second key data (MKB) recorded on a recording medium; and
recording the encrypted content data, the encrypted content key data, and identification data for identifying the content data as encrypted content data.

18. The recording medium recording method as set forth in claim 17, further comprising the step of:
generating further key data (MKB_key) with the second key data and key data (device key data) unique to reproducing means for the recording medium and performing a calculating process for the further key data and the first key data so as to generate the third key data.

19. The recording medium recording method as set forth in claim 17,
wherein the first key data is key data which can be read from the recording medium by conventional recording medium reproducing means.

20. The recording medium recording method as set forth in claim 17,
wherein the first key data is key data which cannot be read from the recording medium by conventional recording medium reproducing means.

21. The recording medium recording method as set forth in claim 17, further comprising the step of:
obtaining the first key data from the outside through a network.

22. The recording medium recording method as set forth in claim 17, further comprising the step of:
performing a signal process for identification data for identifying content data which is recorded on the recording medium as non-encrypted data and the supplied content data and recording the resultant signals on the recording medium when the judged result represents that the supplied content data is content data which does not need to be encrypted.

23. A recording medium recording apparatus, comprising:
a judging portion for judging whether or not supplied content data is content data which needs to be encrypted;
an encryption processing portion for encrypting the supplied content data with content key data and encrypting the content key data with third key data (KL_key) generated with at least first key data (MB_key) and second key data (MKB) which has been recorded on the recording medium when the judging portion has judged that the supplied content data is content data which needs to be encrypted; and
a recording portion for performing a signal process for the encrypted content data which has been output from the encryption processing portion, the encrypted content key data, and identification data for identifying the content data as encrypted content data and recording resultant signals on the recording medium.

24. The recoding medium recording apparatus as set forth in claim 23,
wherein the encryption processing portion is configured to generate further key data (MKB_Key) with the second key data and key data (device key data) unique to reproducing means for the recording medium and perform a calculating process for the generated further key data and the first key data so as to generate the third key data.

25. The recording medium recording apparatus as set forth in claim 23,
wherein the first key data is key data which can be read from the recording medium by conventional reproducing means.

26. The recording medium recording apparatus as set forth in claim 23,
wherein the first key data is key data which cannot be read by conventional reproducing means.

27. The recording medium recording apparatus as set forth in claim 23,
wherein the encryption processing portion is configured to obtain the first key data from the outside through a network.

28. The recording medium recording apparatus as set forth in claim 23,
wherein the recording portion is configured to perform a signal process for identification data for identifying content data which has been recorded on the recording medium as non-encrypted content data and the supplied content data and record the resultant signals on the recording medium when the judging portion has judged that the supplied content data is content data which does not need to be encrypted.

29. A recording medium reproducing method, comprising the steps of:
generating third key data (key locker key data) for decrypting encrypted content key data which has been read from a recording medium with at least first key data (medium bind key data) and second key data (medium key block) which has been read from the recording medium; and
decrypting the encrypted content data which has been read from the recording medium with the content key data which has been decrypted with the third key data.

30. The recording medium reproducing method as set forth in claim 29, further comprising the step of:
generating further key data (MKB_Key) with the second key data and key data (device key data) unique to reproducing means and performing a calculating process for the generated further key data and the first key data so as to generate the third key data.

31. The recording medium reproducing method as set forth in claim 30,
wherein the first key data is key data which can be read from the recording medium by conventional reproducing means.

32. The recording medium reproducing method as set forth in claim 30,
wherein the first key data is key data which cannot be read by conventional reproducing means.
